# EUROPEAN PATENT APPLICATION

(11) **EP 4 664 147 A1**
(43) Date of publication of application: **17.12.2025**
(21) Application number: 25180070.2
(22) Date of filing: 02.06.2025
(51) Int. Cl.: G01S 7/48, G01S 7/51, G01S 17/04, G01S 17/86, G01S 17/931, G01S 13/931

(54) **SETTING DEVICE, SENSOR, SETTING METHOD, AND PROGRAM**

(30) Priority: 13.06.2024 JP 2024096166
(71) Applicant: OMRON Corporation, Kyoto-shi, Kyoto 600-8530 (JP)
(72) Inventor: OKAMOTO, Kazunori, KYOTO, 600-8530 (JP); HASHIMOTO, Minoru, KYOTO, 600-8530 (JP)
(74) Representative: Isarpatent

(57) **Abstract**

A setting device for a sensor configured to perform a two-dimensional scan with light and detect a target object entering a predetermined area, the setting device including: an area setting unit configured to assign an ID to each of a plurality of detection areas for detecting entry of the target object and set a shape of the detection area; and an area set setting unit configured to set a plurality of detection area sets including at least one of the plurality of detection areas, and when a shared ID is assigned to the plurality of detection areas included in at least two of the plurality of detection area sets, the area set setting unit sets the plurality of detection area sets by using the plurality of detection areas to which the shared ID is assigned.

## Description

### TECHNICAL FIELD

The present invention relates to a setting device, a sensor, a setting method, and a program.

### BACKGROUND ART

When a hazard source such as a machine or a robot cooperates with a person, a virtual detection area is set near the hazard source, and a sensor monitors whether an object has entered the detection area. Patent Document 1 describes a detection condition setting method for a sensor configured to detect the approach of an approaching body to a machine.

### CITATION LIST

### PATENT LITERATURE

Patent Literature 1: Japanese Unexamined Patent Publication 2021-186946

### SUMMARY OF INVENTION

### TECHNICAL PROBLEM

A detection area set including one or more detection areas may be manually set. In a case where a plurality of detection area sets are set, one or a plurality of detection areas for each of the detection area sets need to be set. Therefore, setting man-hours of a user increase in accordance with the number of detection area sets.

The present invention is made in view of the problem above, and an object of the present invention is to reduce the setting man-hours of a user.

### SOLUTION TO PROBLEM

According to an aspect of the present invention, there is provided a setting device for a sensor configured to perform a two-dimensional scan with light and detect a target object entering a predetermined area, the setting device including: an area setting unit configured to assign an ID to each of a plurality of detection areas for detecting entry of the target object and set a shape of the detection area; and an area set setting unit configured to set a plurality of detection area sets including at least one of the plurality of detection areas. When a shared ID is assigned to the plurality of detection areas included in at least two of the plurality of detection area sets, the area set setting unit sets the plurality of detection area sets by using the plurality of detection areas to which the shared ID is assigned. According to the setting device, the plurality of detection area sets are set by using the plurality of detection areas to which the shared ID is assigned; therefore, setting man-hours of a user can be reduced.

The setting device includes: a reception unit configured to receive correction of the shape of at least one of the plurality of detection areas; and a correction unit configured to correct the shape of at least one of the plurality of detection areas. When the reception unit receives correction of the shape of one of the plurality of detection areas to which the shared ID is assigned, the correction unit corrects all of the shapes of the plurality of detection areas to which the shared ID is assigned. The correction unit corrects all of the shapes of the plurality of detection areas to which the shared ID is assigned; therefore, the setting man-hours of the user can be reduced.

The setting device includes a display unit configured to display a confirmation screen for, when the reception unit receives correction of the shape of one of the plurality of detection areas to which the shared ID is assigned, confirming whether to correct all of the shapes of the plurality of detection areas to which the shared ID is assigned. The user can confirm the confirmation screen and determine whether to correct all of the shapes of the plurality of detection areas to which the shared ID is assigned.

The setting device includes a display unit configured to display the plurality of detection areas, the ID assigned to each of the plurality of detection areas, and the plurality of detection area sets. The display unit performs display in a state where the plurality of detection areas and the ID assigned to each of the plurality of detection areas are associated with each other. The user can recognize a state where the plurality of detection areas and the ID assigned to each of the plurality of detection areas are associated with each other.

The plurality of detection areas include protection areas, the area setting unit assigns the shared ID to the protection areas in at least two of the plurality of detection area sets, and the area set setting unit sets the at least two of the plurality of detection area sets by using the protection areas to which the shared ID is assigned. The protection area of one of the plurality of detection area sets and the protection area of the other of the plurality of detection area sets can be shared and used.

The plurality of detection areas include warning areas, the area setting unit assigns the shared ID to the warning areas in at least two of the plurality of detection area sets, and the area set setting unit sets the at least two of the plurality of detection area sets by using the warning areas to which the shared ID is assigned. The warning area of one of the plurality of detection area sets and the warning area of the other of the plurality of detection area sets can be shared and used.

The plurality of detection areas include a protection area and a warning area, the area setting unit assigns the shared ID to the protection area of one of at least two of the plurality of detection area sets and the warning area of the other of the at least two of the plurality of detection area sets, and the area set setting unit sets the at least two of the plurality of detection area sets by using the protection area and the warning area to which the shared ID is assigned. The protection area of one of the plurality of detection area sets and the warning area of the other of the plurality of detection area sets can be shared and used.

According to an aspect of the present invention, there is provided a sensor including the setting device. The present invention can also be regarded as a setting method including at least some of the processing described above, a program for causing a computer included in the setting device to execute at least some of the processing described above, or a computer-readable storage medium having such a program recorded in a non-transitory manner. In addition, the present invention can be regarded as a setting system including at least some of the processing described above. The configurations and processing described above can be combined with each other to realize the present invention as long as no technical contradiction arises.

### ADVANTAGEOUS EFFECTS OF INVENTION

According to the present invention, setting man-hours of a user can be reduced.

### BRIEF DESCRIPTION OF THE DRAWINGS

FIG. 1 is a schematic configuration diagram of a sensor system.
FIG. 2 is a diagram illustrating a configuration of a sensor.
FIG. 3 is a functional block diagram of a setting device.
FIG. 4 is a diagram illustrating an example of detection areas and detection area sets.
FIG. 5 is a diagram illustrating an example of detection areas and detection area sets.
FIG. 6 is a diagram illustrating an example of detection areas and detection area sets.
FIG. 7 is a flowchart illustrating an example of processing of the setting device.
FIG. 8 is a diagram illustrating an example of a screen when setting the detection area set.
FIG. 9 is a diagram illustrating an example of a screen when setting the detection area set.
FIG. 10 is a flowchart illustrating an example of processing of the setting device.
FIG. 11 is a diagram illustrating an example of a screen when correcting the detection area.
FIG. 12 is a diagram illustrating an example of a screen when correcting the detection area.
FIG. 13 is a diagram illustrating an example of a screen displayed on a display device.
FIG. 14 is a diagram illustrating an example of a screen displayed on the display device.

### DESCRIPTION OF EMBODIMENTS

Hereinafter, application examples and embodiments will be described with reference to the drawings. The application examples and embodiments described below are aspects of the present application, and do not limit the scope of rights of the present application.

### <Application Example>

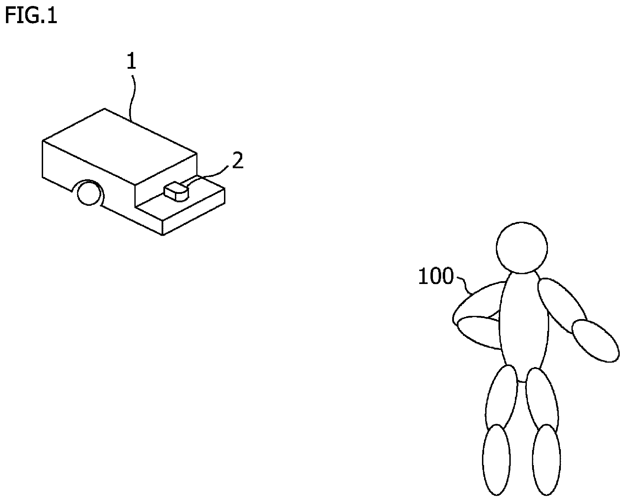

FIG. 1 is a schematic configuration diagram of a sensor system (safety monitoring system). In the sensor system of FIG. 1, in an environment in which a hazard source such as a mobile robot 1 and a worker (person) 100 work together, for example, at a production site such as a factory, the mobile robot 1 is controlled while movement of the worker 100 is identified. The mobile robot 1 is, for example, a traveling device such as an autonomous mobile robot (AMR) or an automated guided vehicle (AGV). The mobile robot 1 may be a transport device in which a manipulator is attached to a traveling device. A sensor 2 is installed at any position of the mobile robot 1. In FIG. 1, the sensor 2 is installed at a front portion of the mobile robot 1.

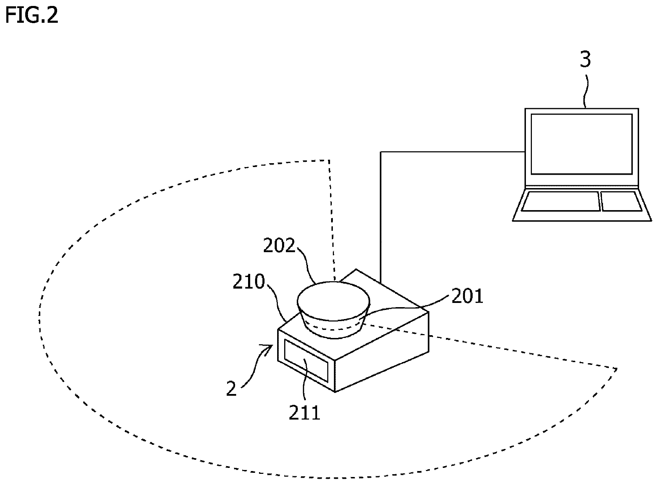

The sensor 2 is also referred to as a safety laser scanner or laser scanner and is a safety scanner compliant with safety standards. The sensor 2 performs a two-dimensional scan with light and thereby detects an object (target object) entering a predetermined area. FIG. 2 is a diagram illustrating a configuration of the sensor 2. The sensor 2 includes a window 201 and a top surface portion 202. The sensor 2 has a structure in which the window 201 having an inverted truncated cone shape is disposed on a main body portion 210. The top surface portion 202 is disposed on the window 201. The window 201 illustrated in FIG. 2 has a tapered shape that widens from one opening portion to the other opening portion, but is not limited to this shape, and the window 201 may have a cylindrical shape.

The window 201 is transparent or translucent (colored with a predetermined transmittance). The window 201 is made of a material through which laser light passes, and is a member for protecting an optical system such as a mirror. The main body portion 210 is provided with a light source, an optical system, a light receiving unit, a control circuit, an indicator lamp, and the like. The laser light output from the light source is reflected by a mirror rotating at high speed inside the window 201, and thus the sensor 2 can scan a predetermined range. The reflected light reflected by an object is guided via the optical system to the light receiving unit and photoelectrically converted. The broken line in FIG. 2 indicates a scanning range of the laser light. In the configuration example illustrated in FIG. 2, a display 211 is disposed on the outer surface of the main body portion 210. The display 211 displays information on a state of the sensor 2, information on a warning to the outside, and the like.

The sensor 2 can be connected by wire or wirelessly to a setting device 3. The setting device 3 performs predetermined setting on the sensor 2. The setting device 3 is a controller (information processing device) that functions as a processing device and a display device (display). The setting device 3 may be constituted by a dedicated device or may be constituted by a general-purpose computer. In the present embodiment, the setting device 3 is configured by installing a setting tool (software program) of the sensor 2 on a general personal computer. In this case, the setting device 3 includes hardware resources such as a processor (CPU), a memory, a storage, a communication I/F, an input device, and a display device, and the function as a processing device described below is implemented by loading a program stored in the storage into the memory and executing the program by using the processor. Examples of the input device include a keyboard, a mouse, a touch panel, and the like. Note that the configuration of the setting device 3 is not limited thereto. For example, all or some of the functions may be configured by a circuit such as an application-specific integrated circuit (ASIC) or a field programmable gate array (FPGA), or all or some of the functions may be executed by a cloud server or another device.

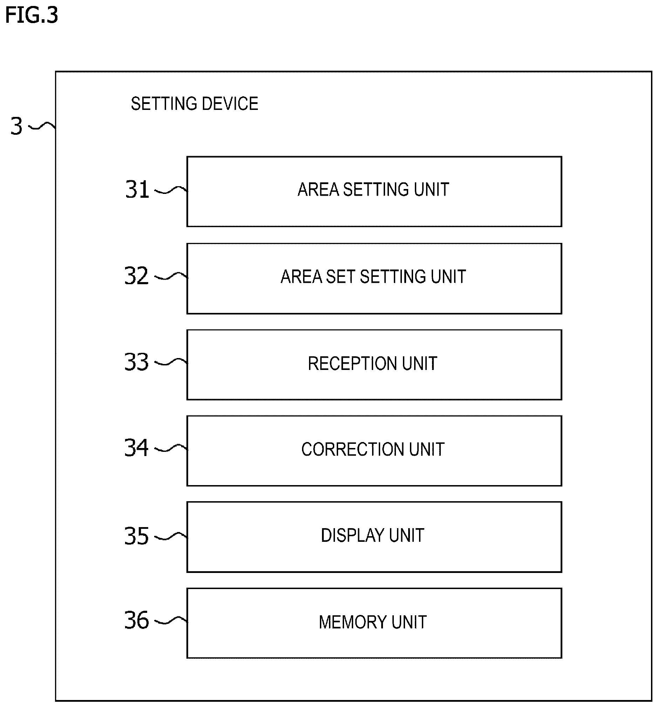

FIG. 3 is a functional block diagram of the setting device 3. The setting device 3 includes, as main functions, an area setting unit 31, an area set setting unit 32, a reception unit (correction reception unit) 33, a correction unit 34, a display unit 35, and a memory unit 36. The area setting unit 31 assigns a unique identification (ID) to each of a plurality of detection areas for detecting entry of a target object and sets the shape of the detection area. The detection area is a virtual two-dimensional region for detecting that an object is approaching the sensor 2, and is set in at least a part of the surrounding area of the sensor 2. When the sensor 2 is installed in the mobile robot 1, the detection area is set in at least a part of the surrounding area of the mobile robot 1. The area set setting unit 32 sets a plurality of detection area sets including at least one of the plurality of detection areas. The reception unit 33 receives input of setting information from a user. For example, the reception unit 33 receives correction of the shape of at least one of the plurality of detection areas. The correction unit 34 corrects the shape of at least one of the plurality of detection areas. The display unit 35 displays setting information (setting data) of the sensor 2 and the like. The memory unit 36 stores the setting information of the sensor 2 and the like.

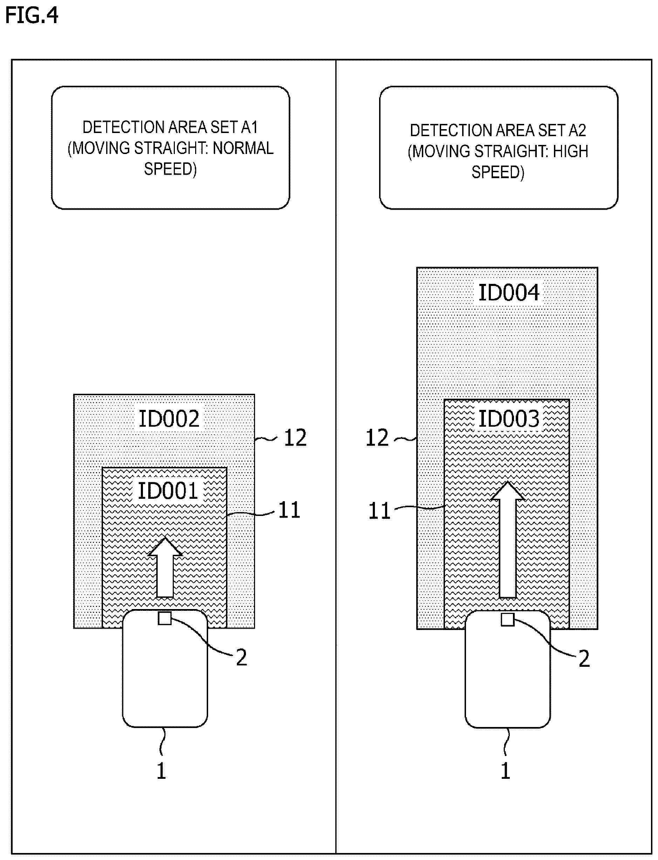

FIG. 4 is a diagram illustrating an example of detection areas and detection area sets. As illustrated in FIG. 4, detection areas are set in a part of the surrounding area of the mobile robot 1. In FIG. 4, a protection area 11 as a detection area and a warning area 12 as a detection area are set in a predetermined area in front of the mobile robot 1. When there is no object (intruder) in the protection area 11, the operation of the mobile robot 1 is permitted. For example, when there is no object in the protection area 11, the sensor 2 outputs a safety signal of operation permission to the mobile robot 1. When an object is detected in the warning area 12, a warning is issued. When an object enters the warning area 12, the sensor 2 may issue a warning. A warning lamp may be used to issue a warning by light. A warning buzzer may be used to issue a warning by sound. When an object enters the warning area 12, the sensor 2 may output a warning signal. The warning device may receive the warning signal from the sensor 2 and issue a warning. Also, when an object is detected in the warning area 12, the operation speed of the mobile robot 1 may be reduced. For example, when an object is present in the warning area 12, the sensor 2 outputs to the mobile robot 1 a control signal for decelerating the operation of the mobile robot 1.

A detection area set A1 in FIG. 4 is set, for example, when the mobile robot 1 moves straight ahead at normal speed. A detection area set A2 in FIG. 4 is set, for example, when the mobile robot 1 moves straight ahead at high speed. IDs are assigned to the protection area 11 and the warning area 12. The detection area set A1 includes the protection area 11 to which ID001 is assigned and the warning area 12 to which ID002 is assigned. Hereinafter, the protection area 11 to which ID001 is assigned is referred to as the protection area 11 (ID001), and the warning area 12 to which ID002 is assigned is referred to as the warning area 12 (ID002). The detection area set A2 includes the protection area 11 to which ID003 is assigned and the warning area 12 to which ID004 is assigned. Hereinafter, the protection area 11 to which ID003 is assigned is referred to as the protection area 11 (ID003), and the warning area 12 to which ID004 is assigned is referred to as the warning area 12 (ID004).

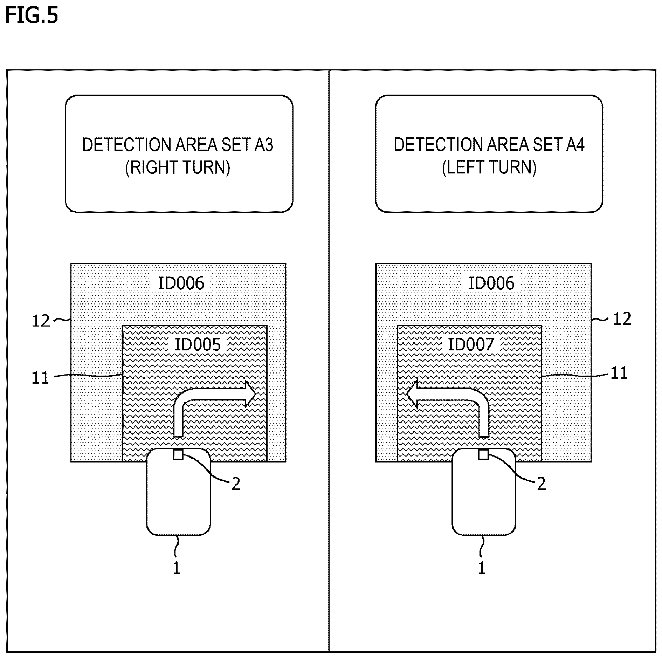

FIG. 5 is a diagram illustrating an example of detection areas and detection area sets. A detection area set A3 in FIG. 5 is set, for example, when the mobile robot 1 turns right. A detection area set A4 in FIG. 5 is set, for example, when the mobile robot 1 turns left. The detection area set A3 includes the protection area 11 to which ID005 is assigned and the warning area 12 to which ID006 is assigned. The detection area set A4 includes the protection area 11 to which ID007 is assigned and the warning area 12 to which ID006 is assigned. Hereinafter, the protection area 11 to which ID005 is assigned is referred to as the protection area 11 (ID005), the warning area 12 to which ID006 is assigned is referred to as the warning area 12 (ID006), and the protection area 11 to which the ID007 is assigned is referred to as the protection area 11 (ID007).

The warning area 12 (ID006) included in the detection area set A3 and the warning area 12 (ID006) included in the detection area set A4 have the same shape. In other words, the warning area 12 (ID006) included in the detection area set A3 and the warning area 12 (ID006) included in the detection area set A4 have the same size (area) and are set at the same position with respect to the installation position of the sensor 2 in the mobile robot 1. Therefore, the setting of the warning area 12 (ID006) included in the detection area set A3 and the setting of the warning area 12 (ID006) included in the detection area set A4 can be shared.

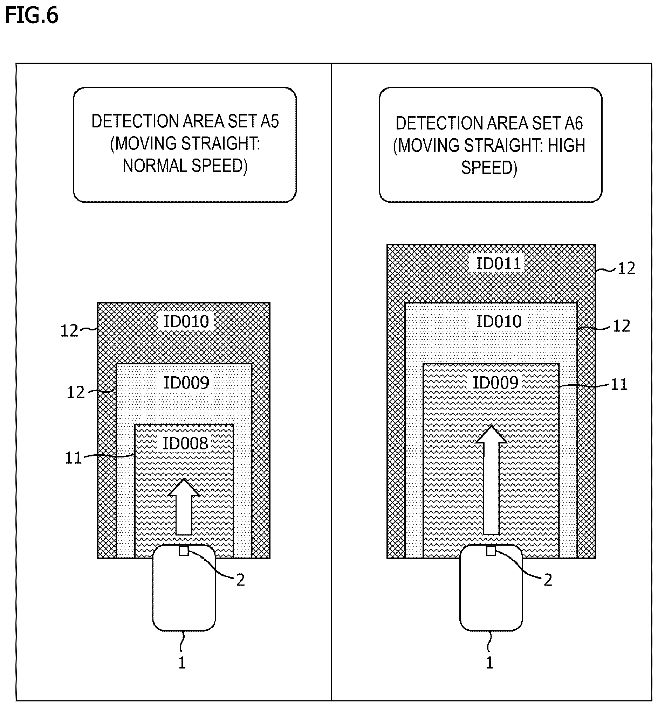

FIG. 6 is a diagram illustrating an example of detection areas and detection area sets. A detection area set A5 in FIG. 6 is set, for example, when the mobile robot 1 moves straight ahead at normal speed. A detection area set A6 in FIG. 6 is set, for example, when the mobile robot 1 moves straight ahead at high speed. The detection area set A5 includes the protection area 11 to which ID008 is assigned, the warning area 12 to which ID009 is assigned, and the warning area 12 to which ID010 is assigned. The detection area set A6 includes the protection area 11 to which ID009 is assigned, the warning area 12 to which ID010 is assigned, and the warning area 12 to which ID011 is assigned. Hereinafter, the protection area 11 to which ID008 is assigned is referred to as the protection area 11 (ID008), the warning area 12 to which ID009 is assigned is referred to as the warning area 12 (ID009), and the warning area 12 to which ID010 is assigned is referred to as the warning area 12 (ID010). Hereinafter, the protection area 11 to which ID009 is assigned is referred to as the protection area 11 (ID009), the warning area 12 to which ID010 is assigned is referred to as the warning area 12 (ID010), and the warning area 12 to which ID011 is assigned is referred to as the warning area 12 (ID011).

The warning area 12 (ID009) included in the detection area set A5 and the protection area 11 (ID009) included in the detection area set A6 have the same shape. In other words, the warning area 12 (ID009) included in the detection area set A5 and the protection area 11 (ID009) included in the detection area set A6 have the same size (area) and are set at the same position with respect to the sensor 2. Therefore, the setting of the warning area 12 (ID009) included in the detection area set A5 and the setting of the protection area 11 (ID009) included in the detection area set A6 can be shared.

The warning area 12 (ID010) included in the detection area set A5 and the warning area 12 (ID010) included in the detection area set A6 have the same shape. In other words, the warning area 12 (ID010) included in the detection area set A5 and the warning area 12 (ID010) included in the detection area set A6 have the same size (area) and are set to the same position with respect to the sensor 2. Therefore, the setting of the warning area 12 (ID010) included in the detection area set A5 and the setting of the warning area 12 (ID010) included in the detection area set A6 can be shared.

For example, when the detection area sets A1 to A6 are set in the sensor 2 installed in the mobile robot 1, the set detection area sets A1 to A6 are switched in accordance with the movement state of the mobile robot 1 or the situation around the mobile robot 1.

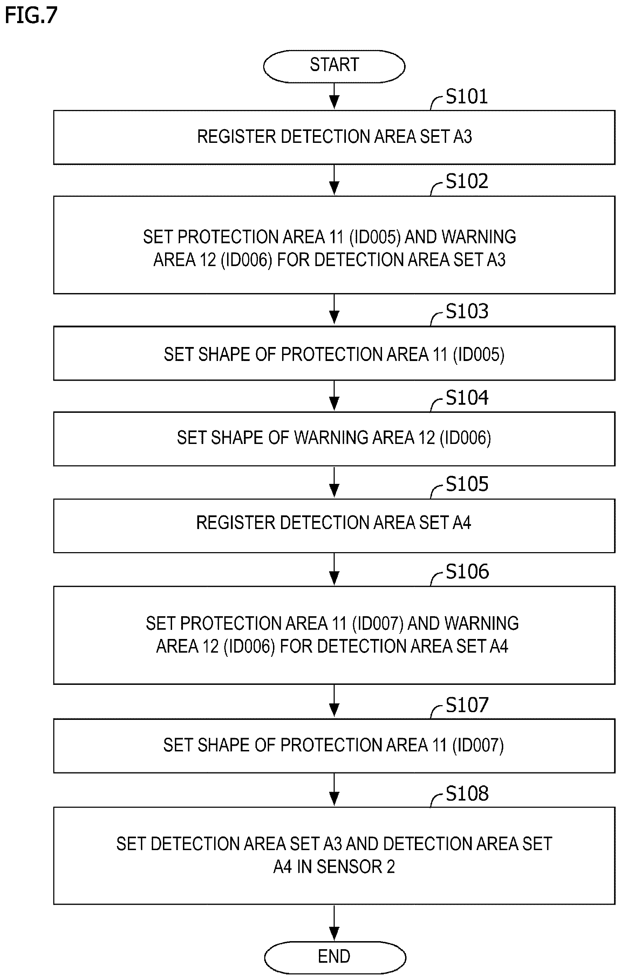

FIG. 7 is a flowchart illustrating an example of processing of the setting device 3. Hereinafter, processing by the setting device 3 when setting (registering) the detection area set A3 and the detection area set A4 in the sensor 2 will be described. In step S101, the area set setting unit 32 registers the name of the detection area set A3 in the memory unit 36. In addition, in step S101, the area setting unit 31 assigns ID005 to the protection area 11 and assigns ID006 to the warning area 12.

In step S102, the area set setting unit 32 sets (registers) the protection area 11 (ID005) and the warning area 12 (ID006) for the detection area set A3.

In step S103, the area setting unit 31 sets the shape of the protection area 11 (ID005). In addition, in step S103, the area setting unit 31 registers the shape of the set protection area 11 (ID005) in the memory unit 36.

In step S104, the area setting unit 31 sets the shape of the warning area 12 (ID006). In addition, in step S104, the area setting unit 31 registers the shape of the set warning area 12 (ID006) in the memory unit 36.

In step S105, the area set setting unit 32 registers the name of the detection area set A4 in the memory unit 36. In addition, in step S105, the area setting unit 31 assigns ID007 to the protection area 11.

In step S106, the area set setting unit 32 sets (registers) the protection area 11 (ID007) and the warning area 12 (ID006) for the detection area set A4.

In step S107, the area setting unit 31 sets the shape of the protection area 11 (ID007). The area setting unit 31 uses the shape of the warning area 12 (ID006) set in step S104; therefore, setting of the shape of the warning area 12 (ID006) can be omitted.

In step S108, the area set setting unit 32 sets the detection area set A3 and the detection area set A4 in the sensor 2.

A shared ID is assigned to the warning area 12 (ID006) of the detection area set A3 and the warning area 12 (ID006) of the detection area set A4.
In assigning IDs to a plurality of detection areas, if the same ID is assigned, the same ID assigned to the plurality of detection areas is called the shared ID. The shared ID (ID006) is assigned to the warning area 12 included in the detection area set A3 and the warning area 12 included in the detection area set A4. The area set setting unit 32 sets the detection area sets A3 and A4 by using the plurality of warning areas 12 (the warning areas 12 of the detection area sets A3 and A4) to which the shared ID (ID006) is assigned. As just described, when the shared ID is assigned to a plurality of detection areas included in at least two of a plurality of detection area sets, the area set setting unit 32 sets the plurality of detection area sets by using the plurality of detection areas to which the shared ID is assigned. The area setting unit 31 omits the shape of the warning area 12 included in the detection area set A4 and to which the shared ID (ID006) is assigned. As just described, the area setting unit 31 omits setting of the shape of at least one of the plurality of detection areas to which the shared ID is assigned.

In the known method of manually setting the detection area set, since the detection area needs to be set to each detection area set, setting man-hours of a user increase in accordance with the number of detection area sets. According to the present embodiment, the plurality of detection area sets are set by using the plurality of detection areas to which the shared ID is assigned; therefore, setting man-hours of the user can be reduced. For example, since setting of at least one of the plurality of detection areas to which the shared ID is assigned is omitted, the setting man-hours of the user can be reduced. In addition, in the known method of manually setting the detection area set, the amount of data increases in accordance with the number of detection areas, and thus resources such as a memory may be strained. According to the present embodiment, since the plurality of detection area sets are set by using the plurality of detection areas to which the shared ID is assigned, strain on resources such as a memory can be avoided.

The plurality of detection areas may include the protection areas 11. The area setting unit 31 may assign the shared ID to the protection areas 11 in at least two of the plurality of detection area sets. In this case, the area set setting unit 32 sets at least two of the plurality of detection area sets by using the protection areas 11 to which the shared ID is assigned. As just described, the protection area 11 of one of the plurality of detection area sets and the protection area 11 of the other of the plurality of detection area sets can be shared and used.

The plurality of detection areas may include the warning areas 12. The area setting unit 31 may assign the shared ID to the warning areas 12 in at least two of the plurality of detection area sets. In this case, the area set setting unit 32 sets at least two of the plurality of detection area sets by using the warning areas 12 to which the shared ID is assigned. As just described, the warning area 12 of one of the plurality of detection area sets and the warning area 12 of the other of the plurality of detection area sets can be shared and used.

The plurality of detection areas may include the protection area 11 and the warning area 12. The area setting unit 31 may assign the shared ID to the protection area 11 of one of at least two of the plurality of detection area sets and the warning area 12 of the other of at least two of the plurality of detection area sets. In this case, the area set setting unit 32 sets at least two of the plurality of detection area sets by using the protection area 11 and the warning area 12 to which the shared ID is assigned. As just described, the protection area 11 of one of the plurality of detection area sets and the warning area 12 of the other of the plurality of detection area sets can be shared and used.

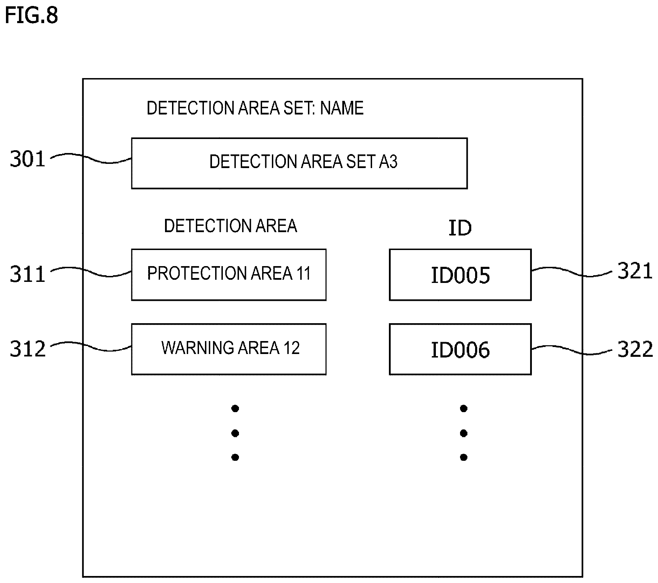

FIG. 8 is a diagram illustrating an example of a screen when setting the detection area set. The screen illustrated in FIG. 8 is displayed, for example, on the display unit 35. Here, a case where the detection area set A3 is set will be described. In a rectangular box 301 in FIG. 8, the name of the detection area set A3 input by the user is displayed. In a rectangular box 311 in FIG. 8, the protection area 11 selected as the detection area is displayed. In a rectangular box 321 in FIG. 8, the ID assigned to the protection area 11 displayed in the rectangular box 311 is displayed. For example, when the user selects the protection area 11 as the detection area and assigns ID005 to the selected protection area 11, ID005 is displayed in the rectangular box 321. When the protection area 11 is shared, the user assigns the already used ID to the protection area 11. When the protection area 11 is not shared, the user assigns an unused ID to the protection area 11.

In a rectangular box 312 in FIG. 8, the warning area 12 selected as the detection area is displayed. In a rectangular box 322 in FIG. 8, the ID assigned to the warning area 12 displayed in the rectangular box 312 is displayed. For example, when the user selects the warning area 12 as the detection area and assigns ID006 to the selected warning area 12, ID006 is displayed in the rectangular box 322. When the warning area 12 is shared, the user assigns the already used ID to the warning area 12. When the warning area 12 is not shared, the user assigns an unused ID to the warning area 12. After assigning the ID, the user sets the shape of the protection area 11 (ID005) and the shape of the warning area 12 (ID006).

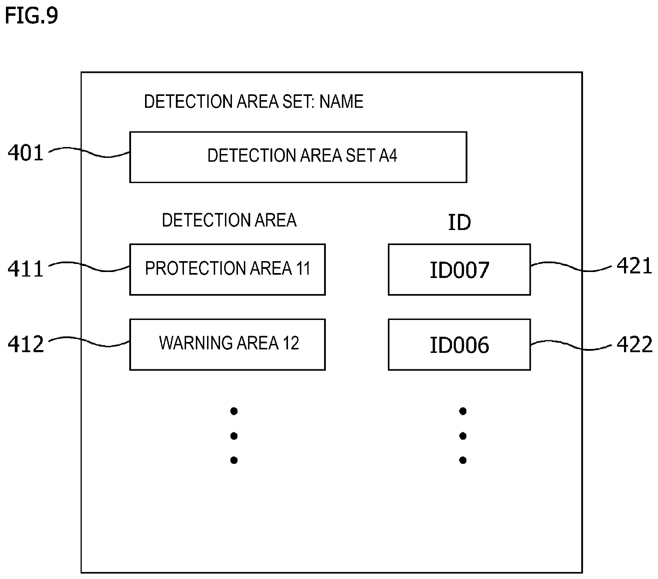

FIG. 9 is a diagram illustrating an example of a screen when setting the detection area set. The screen illustrated in FIG. 9 is displayed, for example, on the display unit 35. Here, a case where the detection area set A4 is set will be described. In a rectangular box 401 in FIG. 9, the name of the detection area set A4 input by the user is displayed. In a rectangular box 411 in FIG. 9, the protection area 11 selected as the detection area is displayed. In a rectangular box 421 in FIG. 9, the ID assigned to the protection area 11 displayed in the rectangular box 411 is displayed. For example, when the user selects the protection area 11 as the detection area and assigns ID007 to the selected protection area 11, ID007 is displayed in the rectangular box 421.

In a rectangular box 412 in FIG. 9, the warning area 12 selected as the detection area is displayed. In a rectangular box 422 in FIG. 9, the ID assigned to the warning area 12 displayed in the rectangular box 412 is displayed. For example, when the user selects the warning area 12 as the detection area and assigns ID006 to the selected warning area 12, ID006 is displayed in the rectangular box 422. After assigning the ID, the user sets the shape of the protection area 11 (ID007). The shape of the warning area 12 (ID006) is already set; therefore, setting of the shape of the warning area 12 (ID006) can be omitted.

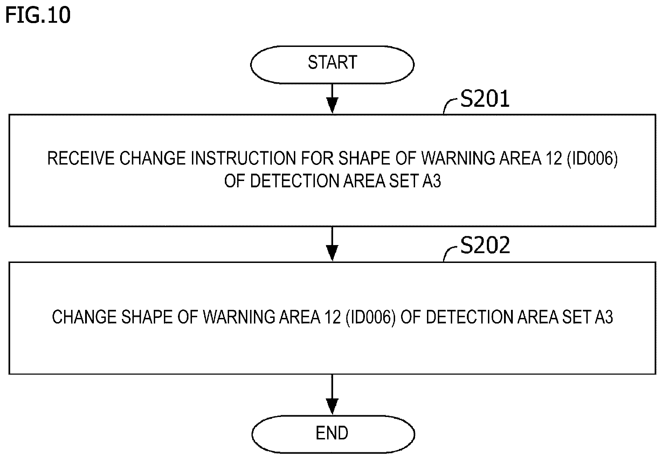

FIG. 10 is a flowchart illustrating an example of processing of the setting device 3. Hereinafter, processing of the setting device 3 when correcting the warning area 12 (ID006) shared between the detection area set A3 and the detection area set A4 will be described. In step S201, the reception unit 33 receives a correction instruction (change instruction) for the shape of the warning area 12 (ID006) of the detection area set A3 from the user.

In step S202, the correction unit 34 corrects (changes) the shape of the warning area 12 (ID006) of the detection area set A3. The warning area 12 (ID006) is shared between the detection area set A3 and the detection area set A4; therefore, when the shape of the warning area 12 (ID006) of the detection area set A3 is corrected, the shape of the warning area 12 (ID006) of the detection area set A4 is also corrected. A shared ID is assigned to the warning area 12 (ID006) of the detection area set A3 and the warning area 12 (ID006) of the detection area set A4. When the detection area (warning area 12) to which the shared ID is assigned in a specific detection area set is corrected, the detection area (warning area 12) to which the shared ID is assigned in another detection area set is also corrected at the same time.

When the reception unit 33 receives correction of the shape of at least one of the plurality of detection areas from the user, the correction unit 34 corrects the shape of at least one of the plurality of detection areas. When the reception unit 33 receives correction of the shape of one of the plurality of detection areas to which the shared ID is assigned from the user, the correction unit 34 corrects all of the shapes of the plurality of detection areas to which the shared ID is assigned. The correction unit 34 corrects all of the shapes of the plurality of detection areas to which the shared ID is assigned; therefore, the setting man-hours of the user can be reduced.

To date, there has been a known method of copying and pasting a preset detection area to a new detection area set for editing. However, in the known method, at the time of correcting the common detection area, editing needs to be performed for each detection area set, which causes the setting man-hours of the user to increase in accordance with the number of detection area sets. According to the present embodiment, there is no need to perform editing for each detection area set; therefore, the setting man-hours of the user can be reduced. In addition, in the known method, the amount of data increases in accordance with the number of detection areas, and thus resources such as a memory may be strained.

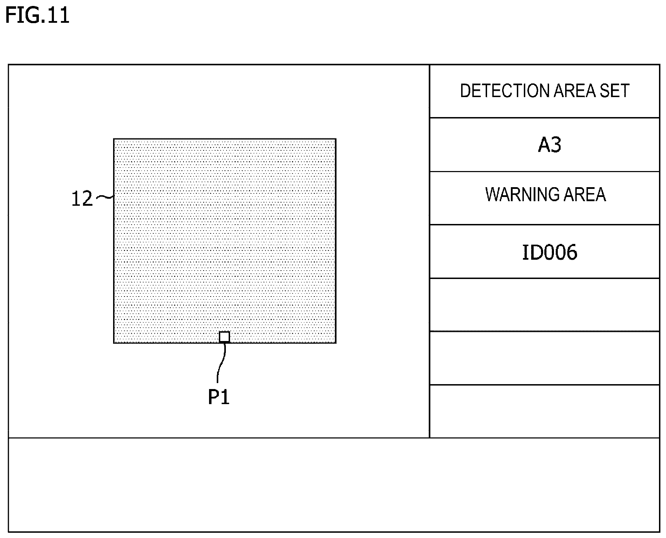

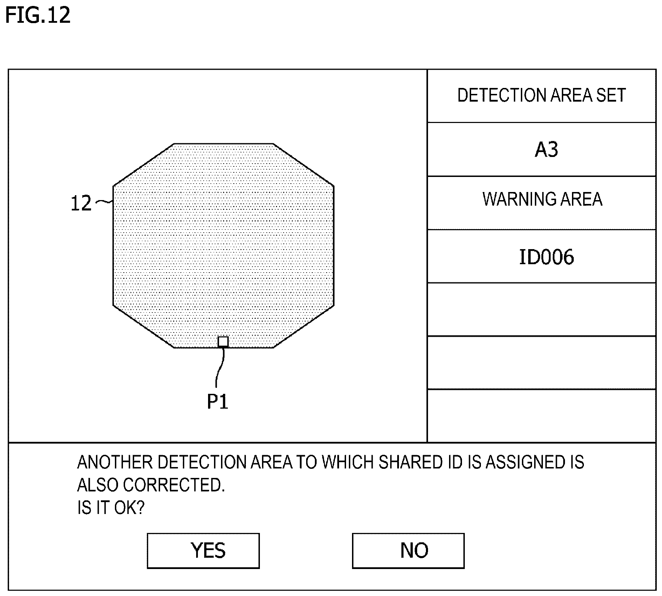

FIGS. 11 and 12 are diagrams each illustrating an example of a screen when correcting the detection area. The screens illustrated in FIGS. 11 and 12 are displayed, for example, on the display unit 35. Hereinafter, a case where the warning area 12 (ID006) shared between the detection area set A3 and the detection area set A4 is corrected will be described. In FIG. 11, the warning area 12 (ID006) before correction is displayed. In FIG. 12, the warning area 12 (ID006) after correction is displayed. In FIGS. 11 and 12, a predetermined position P1 is displayed. The predetermined position P1 may be an installation position of the sensor 2 in the mobile robot 1.

When the warning area 12 (ID006) is corrected, a confirmation screen including a message indicating that setting of the other detection area to which the shared ID is assigned is also corrected is displayed on the display unit 35. When YES is selected, correction of the warning area 12 (ID006) of the detection area set A3 is confirmed, and the warning area 12 (ID006) of the detection area set A4 is also corrected. In other words, the correction of the shape of the detection area is simultaneously reflected on the warning area 12 (ID006) of the detection area set A3 and the warning area 12 (ID006) of the detection area set A4.

When the reception unit 33 receives correction of the shape of one of the plurality of detection areas to which the shared ID is assigned, the display unit 35 displays a confirmation screen for confirming whether to correct all of the shapes of the plurality of detection areas to which the shared ID is assigned. The user can confirm the confirmation screen and determine whether to correct all of the shapes of the plurality of detection areas to which the shared ID is assigned.

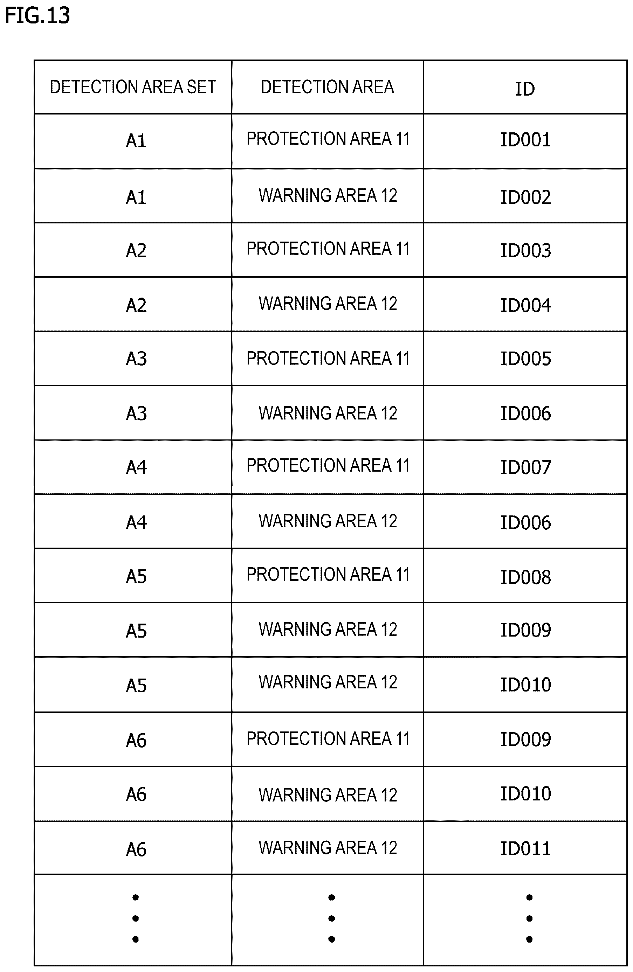

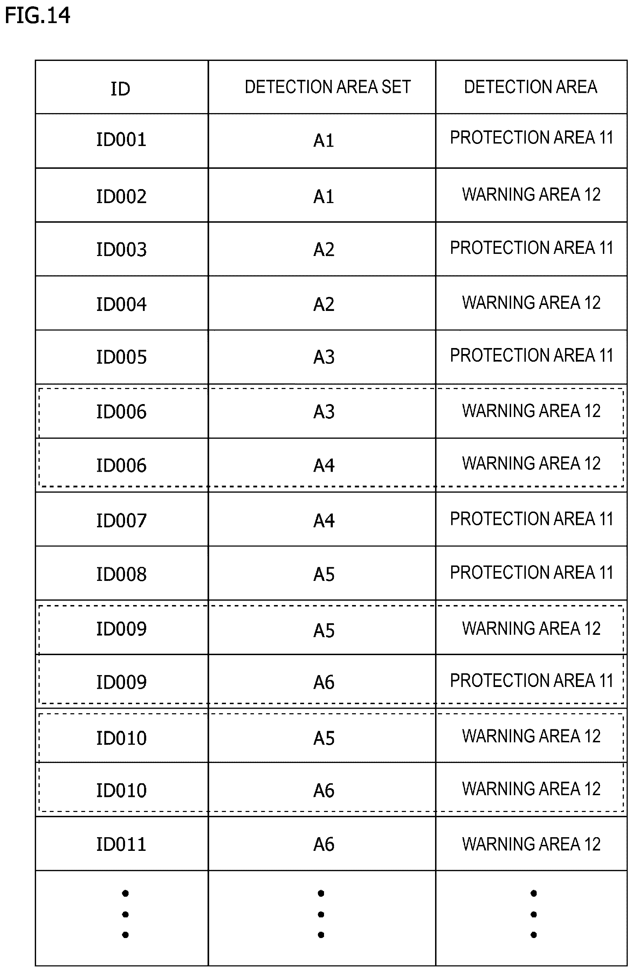

FIGS. 13 and 14 are diagrams each illustrating an example of a screen displayed on the display unit 35. In FIG. 13, for each detection area set, the IDs of the detection areas included in the detection area set are displayed. In FIG. 14, for each ID, the detection area set and the detection area are displayed. As illustrated in FIGS. 13 and 14, the detection area sets and detection areas with which the IDs are associated are displayed. The user can recognize which ID is associated with which detection area set. In addition, the user can recognize which ID is associated with which detection area.

By visually recognizing the screen illustrated in FIG. 14, the user can recognize the shared ID (ID006) assigned to the warning area 12 of the detection area set A3 and the warning area 12 of the detection area set A4. By visually recognizing the screen illustrated in FIG. 14, the user can recognize the shared ID (ID009) assigned to the warning area 12 of the detection area set A5 and the protection area 11 of the detection area set A6. By visually recognizing the screen illustrated in FIG. 14, the user can recognize the shared ID (ID010) assigned to the warning area 12 of the detection area set A5 and the warning area 12 of the detection area set A6.

The display unit 35 displays the plurality of detection areas, the ID assigned to each of the plurality of detection areas, and the plurality of detection area sets. The display unit 35 performs displaying in a state where the plurality of detection areas and the ID assigned to each of the plurality of detection areas are associated with each other. The user can recognize a state where the plurality of detection areas and the ID assigned to each of the plurality of detection areas are associated with each other.

The detection area set may include one detection area. The detection area set may include one protection area 11. The area setting unit 31 may set one protection area 11 with respect to one detection area set. The detection area set may include one warning area 12. The area setting unit 31 may set one warning area 12 with respect to one detection area set.

Although an example in which the sensor 2 is installed in the mobile robot 1 is described above, the configuration is not limited to this example. The sensor 2 may be installed in a fixed hazard source such as a fixed robot or a manufacturing machine, or may be installed around a fixed hazard source. When the sensor 2 is installed in or around a fixed hazard source, the plurality of detection area sets set in the sensor 2 may be switched in accordance with the operating state of the fixed hazard source. When the sensor 2 is installed in or around a fixed hazard source, a plurality of detection area sets set in the sensor 2 may be switched in accordance with the operating state around the fixed hazard source or a time zone.

A plurality of sensors 2 may be used. The detection area set set for the sensor 2 installed in a first fixed hazard source and the detection area set set for the sensor 2 installed in a second fixed hazard source may be different. For example, the detection area set A5 may be set for the sensor 2 installed in the first fixed hazard source, and the detection area set A6 may be set for the sensor 2 installed in the second fixed hazard source. The detection area set set for the sensor 2 installed in the first fixed hazard source and the detection area set set for the sensor 2 installed in the second fixed hazard source may be the same. For example, the detection area set A5 may be set for the sensor 2 installed in the first fixed hazard source and the sensor 2 installed in the second fixed hazard source. The ID used for setting a detection area set for a specific sensor 2 may be used for setting a detection area set for another sensor 2. For example, a detection area set may be set for a plurality of sensors 2 by using an ID common to the plurality of sensors 2.

The sensor 2 and the setting device 3 may be integrated. For example, the sensor 2 may include the setting device 3. The sensor 2 may be configured by installing a setting tool on the processing device of the sensor 2. The display 211 of the sensor 2 may function as a display unit (display device).

The present invention can also be regarded as a setting method or a monitoring method including at least some of the processing described above, a program for causing a computer included in the setting device 3 to execute at least some of the processing described above, or a computer-readable storage medium having such a program recorded in a non-transitory manner. In addition, the present invention can be regarded as a setting system or a monitoring system including at least some of the processing described above. The configurations and processing described above can be combined with each other to realize the present invention as long as no technical contradiction arises.

### <Supplementary Note 1>

A setting device (3) for a sensor (2) configured to perform a two-dimensional scan with light and detect a target object entering a predetermined area, the setting device including: an area setting unit (31) configured to assign an ID to each of a plurality of detection areas for detecting entry of the target object and set a shape of the detection area; and an area set setting unit (32) configured to set a plurality of detection area sets including at least one of the plurality of detection areas, in which a shared ID is assigned to the plurality of detection areas included in at least two of the plurality of detection area sets, the area set setting unit (32) sets the plurality of detection area sets by using the plurality of detection areas to which the shared ID is assigned.

### <Supplementary Note 2>

The setting device (3) according to Supplementary Note 1, including: a reception unit (33) configured to receive correction of the shape of at least one of the plurality of detection areas; and a correction unit (34) configured to correct the shape of at least one of the plurality of detection areas, in which, when the reception unit (33) receives correction of the shape of one of the plurality of detection areas to which the shared ID is assigned, the correction unit (34) corrects all of the shapes of the plurality of detection areas to which the shared ID is assigned.

### <Supplementary Note 3>

The setting device (3) according to Supplementary Note 2, including a display unit (35) configured to display a confirmation screen for, when the reception unit (33) receives correction of the shape of one of the plurality of detection areas to which the shared ID is assigned, confirming whether to correct all of the shapes of the plurality of detection areas to which the shared ID is assigned.

### <Supplementary Note 4>

The setting device (3) according to any one of Supplementary Notes 1 to 3, including a display unit (35) configured to display the plurality of detection areas, the ID assigned to each of the plurality of detection areas, and the plurality of detection area sets, in which the display unit (35) performs display in a state where the plurality of detection areas and the ID assigned to each of the plurality of detection areas are associated with each other.

### <Supplementary Note 5>

The setting device (3) according to any one of Supplementary Notes 1 to 4, in which the plurality of detection areas include protection areas (11), the area setting unit (31) assigns the shared ID to the protection areas (11) in at least two of the plurality of detection area sets, and the area set setting unit (32) sets the at least two of the plurality of detection area sets by using the protection areas (11) to which the shared ID is assigned.

### <Supplementary Note 6>

The setting device according to any one of Supplementary Notes 1 to 5, in which the plurality of detection areas include warning areas (12), the area setting unit (31) assigns the shared ID to the warning areas (12) in at least two of the plurality of detection area sets, and the area set setting unit (32) sets the at least two of the plurality of detection area sets by using the warning areas (12) to which the shared ID is assigned.

### <Supplementary Note 7>

The setting device according to any one of Supplementary Notes 1 to 6, in which the plurality of detection areas include a protection area (11) and a warning area (12), the area setting unit (31) assigns the shared ID to the protection area (11) of one of at least two of the plurality of detection area sets and the warning area (12) of the other of the at least two of the plurality of detection area sets, and the area set setting unit (32) sets the at least two of the plurality of detection area sets by using the protection area (11) and the warning area (12) to which the shared ID is assigned.

### <Supplementary Note 8>

A sensor (2) including the setting device (3) according to any one of Supplementary Notes 1 to 7.

### <Supplementary Note 9>

A setting method for a sensor (2) configured to perform a two-dimensional scan with light and detect a target object entering a predetermined area, the setting method including: area setting of assigning an ID to each of a plurality of detection areas for detecting entry of the target object and setting a shape of the detection area; and area set setting of setting a plurality of detection area sets including at least one of the plurality of detection areas, in which, in the area set setting, when a shared ID is assigned to the plurality of detection areas included in at least two of the plurality of detection area sets, the plurality of detection area sets are set by using the plurality of detection areas to which the shared ID is assigned.

### <Supplementary Note 10>

A program for causing a computer included in a setting device (3) for a sensor (2) configured to perform a two-dimensional scan with light and detect a target object entering a predetermined area, to execute: area setting of assigning an ID to each of a plurality of detection areas for detecting entry of the target object and setting a shape of the detection area; and detection area set setting of setting a plurality of detection area sets including at least one of the plurality of detection areas, in which, in the area set setting, when a shared ID is assigned to the plurality of detection areas included in at least two of the plurality of detection area sets, the plurality of detection area sets are set by using the plurality of detection areas to which the shared ID is assigned.

### REFERENCE SIGNS LIST

1: Mobile robot
2: Sensor
3: Setting device
11: Protection area
12: Warning area
31: Area setting unit
32: Area set setting unit
33: Reception unit
34: Correction unit
35: Display unit
36: Memory unit

## Claims

1. A setting device (3) for a sensor (2) configured to perform a two-dimensional scan with light and detect a target object entering a predetermined area, the setting device (3) comprising:
an area setting unit (31) configured to assign an ID to each of a plurality of detection areas for detecting entry of the target object and set a shape of the detection area; and
an area set setting unit (32) configured to set a plurality of detection area sets including at least one of the plurality of detection areas, wherein
when a shared ID is assigned to the plurality of detection areas included in at least two of the plurality of detection area sets, the area set setting unit (32) sets the plurality of detection area sets by using the plurality of detection areas to which the shared ID is assigned.

2. The setting device (3) according to claim 1, comprising:
a reception unit (33) configured to receive correction of the shape of at least one of the plurality of detection areas; and
a correction unit (34) configured to correct the shape of at least one of the plurality of detection areas, wherein
when the reception unit (33) receives correction of the shape of one of the plurality of detection areas to which the shared ID is assigned, the correction unit (34) corrects all of the shapes of the plurality of detection areas to which the shared ID is assigned.

3. The setting device (3) according to claim 2, comprising:
a display unit (35) configured to display a confirmation screen for, when the reception unit (33) receives correction of the shape of one of the plurality of detection areas to which the shared ID is assigned, confirming whether to correct all of the shapes of the plurality of detection areas to which the shared ID is assigned.

4. The setting device (3) according to any one of claims 1 to 3, comprising:
a display unit (35) configured to display the plurality of detection areas, the ID assigned to each of the plurality of detection areas, and the plurality of detection area sets, wherein
the display unit (35) performs display in a state where the plurality of detection areas and the ID assigned to each of the plurality of detection areas are associated with each other.

5. The setting device (3) according to any one of claims 1 to 4, wherein
the plurality of detection areas include protection areas (11),
the area setting unit (31) assigns the shared ID to the protection areas (11) in at least two of the plurality of detection area sets, and
the area set setting unit (32) sets the at least two of the plurality of detection area sets by using the protection areas (11) to which the shared ID is assigned.

6. The setting device (3) according to any one of claims 1 to 5, wherein
the plurality of detection areas include warning areas (12),
the area setting unit (31) assigns the shared ID to the warning areas (12) in at least two of the plurality of detection area sets, and
the area set setting unit (32) sets the at least two of the plurality of detection area sets by using the warning areas (12) to which the shared ID is assigned.

7. The setting device (3) according to any one of claims 1 to 6, wherein
the plurality of detection areas include a protection area (11) and a warning area (12),
the area setting unit (31) assigns the shared ID to the protection area (11) of one of at least two of the plurality of detection area sets and the warning area (12) of the other of the at least two of the plurality of detection area sets, and
the area set setting unit (32) sets the at least two of the plurality of detection area sets by using the protection area (11) and the warning area (12) to which the shared ID is assigned.

8. A sensor (2) comprising:
the setting device (3) according to any one of claims 1 to 7.

9. A setting method for a sensor (2) configured to perform a two-dimensional scan with light and detect a target object entering a predetermined area, the setting method comprising:
area setting of assigning an ID to each of a plurality of detection areas for detecting entry of the target object and setting a shape of the detection area; and
area set setting of setting a plurality of detection area sets including at least one of the plurality of detection areas, wherein
in the area set setting, when a shared ID is assigned to the plurality of detection areas included in at least two of the plurality of detection area sets, the plurality of detection area sets are set by using the plurality of detection areas to which the shared ID is assigned.

10. A program for causing a computer included in a setting device (3) for a sensor (2) configured to perform a two-dimensional scan with light and detect a target object entering a predetermined area, to execute:
area setting of assigning an ID to each of a plurality of detection areas for detecting entry of the target object and setting a shape of the detection area; and
area set setting of setting a plurality of detection area sets including at least one of the plurality of detection areas, wherein
in the area set setting, when a shared ID is assigned to the plurality of detection areas included in at least two of the plurality of detection area sets, the plurality of detection area sets are set by using the plurality of detection areas to which the shared ID is assigned.
